Europäisches Patentamt

European Patent Office

Office européen des brevets

(11) Veröffentlichungsnummer: **0 006 191**
**A1**

(19)

(12)
# EUROPÄISCHE PATENTANMELDUNG

(21) Anmeldenummer: 79101805.4

(51) Int. Cl.³: **B 65 B 13/32**

(22) Anmeldetag: **07.06.79**

(30) Priorität: **08.06.78 DE 2825068**

(43) Veröffentlichungstag der Anmeldung: **09.01.80**
**Patentblatt 80/1**

(84) Benannte Vertragsstaaten: **FR IT NL**

(71) Anmelder: **Banai, Andras, Stresemannstrasse 5,**
**D-5000 Köln 90 (DE)**

(72) Erfinder: **Banai, Andras, Stresemannstrasse 5, D-5000**
**Köln 90 (DE)**

(74) Vertreter: **Freischem, Werner, Dipl.-Ing. et al, An**
**Gross St. Martin 2, D-5000 Köln 1 (DE)**

(54) **Handschweissgerät für thermoplastische Umschnürungsbänder.**

(57) Bei einem Handschweißgerät für thermoplastische Umschnürungsbänder mit einer Klemmvorrichtung zum Festhalten
des Bandanfangs (2), einer sich aus einem feststehenden
Spannbett (6) und einer drehbaren und vom Spannbett (6)
abhebbaren Spannwalze (7) zusammensetzenden Spannvorrichtung, einem plattenförmigen zwischen die überlappenden
Bandenden zeitweilig einschiebbaren Heizelement (8), einem
Preßstempel (9) zum Andrücken der erhitzten Bandenden und
mit einer Schneidvorrichtung (11, 12) zum Abschneiden eines
Umschnürungsbandes (1) von einer Vorratsrolle sind zur Betätigung der Klemmvorrichtung, der Spannvorrichtung, der
Schneidvorrichtung, des Preßstempels und des Heizelementes
Handhebel vorgesehen.

Zur Bedienungsvereinfachung des Handschweißgerätes
ist zum Öffnen der Klemmvorrichtung (3, 4) und zum Öffnen der
Spannvorrichtung (6, 7) ein gegen die Wirkung mindestens
einer Feder (5, 18) verschwenkbarer Lüftungshebel (15) vorgesehen, und ein über eine Freilaufkupplung (47) mit der Spannwalze (7) kuppelbarer Betätigungshebel (14) ist über eine
Schleppkupplung (44, 45, 46) mit dem Heizelement (8), der
Schneidvorrichtung (11, 12) und dem Preßstempel (9) kuppelbar, wobei das Abschneiden und Zusammemschweißen der
überlappenden Enden durch Bewegen des Betätigungshebels
(14) in Freilaufrichtung erfolgt.

0006191

- 1 -

Anmelder: A. Banai
Stresemannstraße 5
5000 Köln 90

B 7 PaGm 78/1

Bezeichnung: Handschweißgerät für thermoplastische
Umschnürungsbänder

Die Erfindung bezieht sich auf ein Handschweißgerät für thermoplastische Umschnürungsbänder gemäß dem Oberbegriff des Anspruchs 1.

Handschweißgeräte dieser Art sind bekannt aus der DE-OS 25 20 349.

Die bekannten Handschweißgeräte haben den Nachteil, daß ihre Handhabung unbequem ist und daß zum Spannen des Umschnürungsbandes sowie zum Verschweißen der sich überlappenden Enden des Umschnürungsbandes zwei nahezu gleichzeitig zu bedienende Handhebel erforderlich sind.

Aufgabe der Erfindung ist es, ein besonders leicht zu handhabendes Handschweißgerät zu schaffen, das von einer Hand bedient werden kann und bei dem eine unrichtige Handhabung nahezu ausgeschlossen ist.

Diese Aufgabe wird erfindungsgemäß gelöst durch die Merkmale des Patentanspruchs 1.

Zum Einlegen des Umschnürungsbandes ist bei dem erfindungsgemäßen Gerät lediglich ein Anheben des Lüfterhebels erforderlich. Nachdem der Bandanfang zwischen einer Klemmfläche und einem Klemmstück gebracht und durch Absenken des Lüfterhebels festgeklemmt ist, kann das nach Umschnüren des Packstücks zwischen dem Spannbett und der Spannwalze verlaufende Bandende durch Loslassen des Lüfterhebels festgehalten werden. Durch ein Gewicht oder aber auch durch eine Feder wird die Spannwalze in Anlage an das zu spannende Bandende gehalten. Da die Spannwalze über eine Freilaufkupplung in nur einer Richtung drehbar gehalten ist, kann das Umschnürungsband zunächst von Hand gespannt werden. Durch wenige Hube mit dem Betätigungshebel kann dann die Spannung des Umschnürungsbandes bis auf ihren endgültigen Wert gesteigert werden. Ist dieser erreicht, dann wird der Betätigungshebel in Freilaufrichtung verschwenkt, bis seine Schleppkupplung Anlage findet an einem mit dem Heizelement, dem Preßstempel und der Schneidvorrichtung gekuppelten Teil. Durch weiteres Verschwenken des Betätigungshebels erfolgen das Vorschieben des Heizelements, das Abschneiden des Umschnürungsbandes von einer Vorratsrolle sowie das Anpressen der zu verschweissenden Bandenden.

Durch leichtes Anheben des Lüfterhebels wird die Spannwalze vom Umschnürungsband abgehoben, so daß das Gerät seitlich vom geschlossenen Umschnürungsband abgezogen werden kann.

Weitere Merkmale der Erfindung ergeben sich aus den Patentansprüchen.

In der folgenden Beschreibung wird unter Bezugnahme auf die Zeichnungen eines Ausführungsbeispiels die Erfindung näher erläutert. Die Zeichnungen zeigen in

Figur 1 eine Seitenansicht des erfindungsgemäßen Handschweißgerätes bei geöffneter Klemmvorrichtung und geöffneter Spannvorrichtung,

Figur 2 eine Ansicht nach der Schnittlinie II-II in Figur 6,

Figur 3 eine Ansicht von links des Gerätes nach Figur 1,

Figur 4 eine Ansicht gemäß Figur 1 bei geschlossener Klemmvorrichtung und geschlossener Spannvorrichtung,

Figur 5 einen Teil des Betätigungshebels mit Schleppkupplung und Freilaufkupplung,

Figur 6 eine Draufsicht des Gerätes nach Figur 1,

Figur 7 eine Ansicht von links des Geräts nach Figur 1.

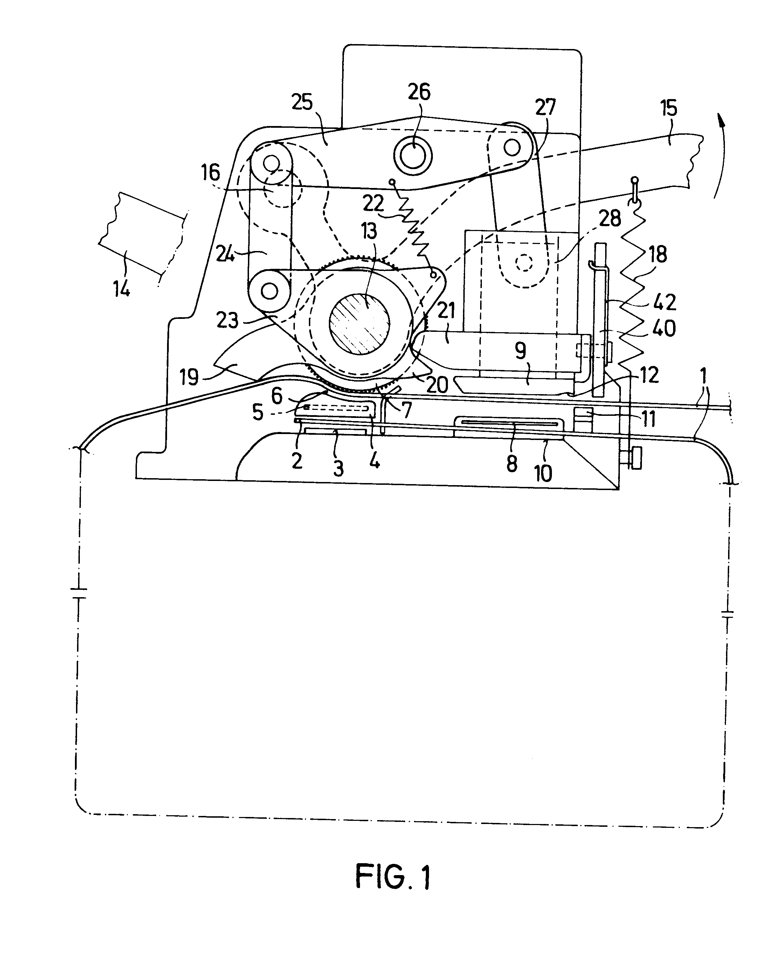

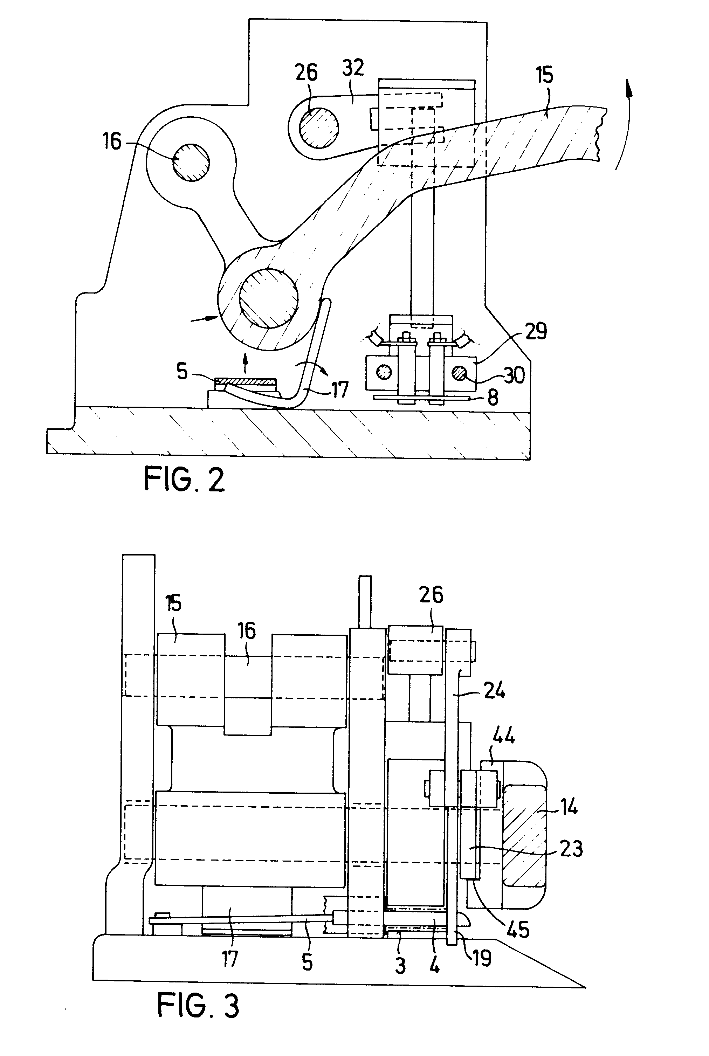

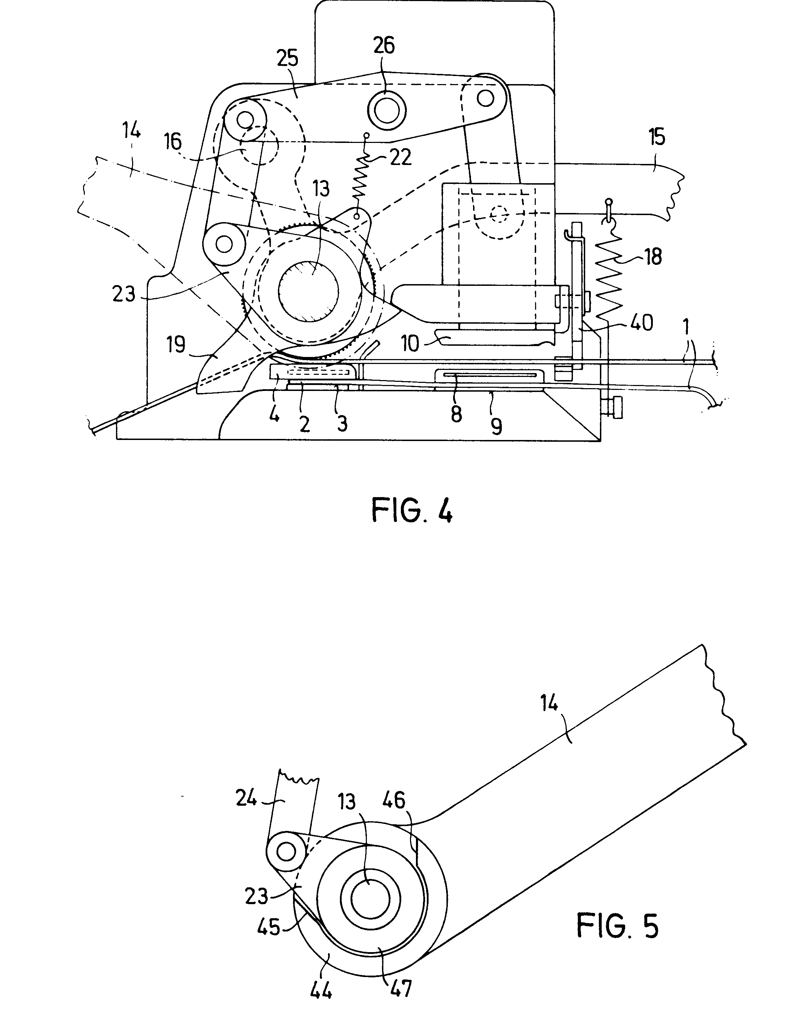

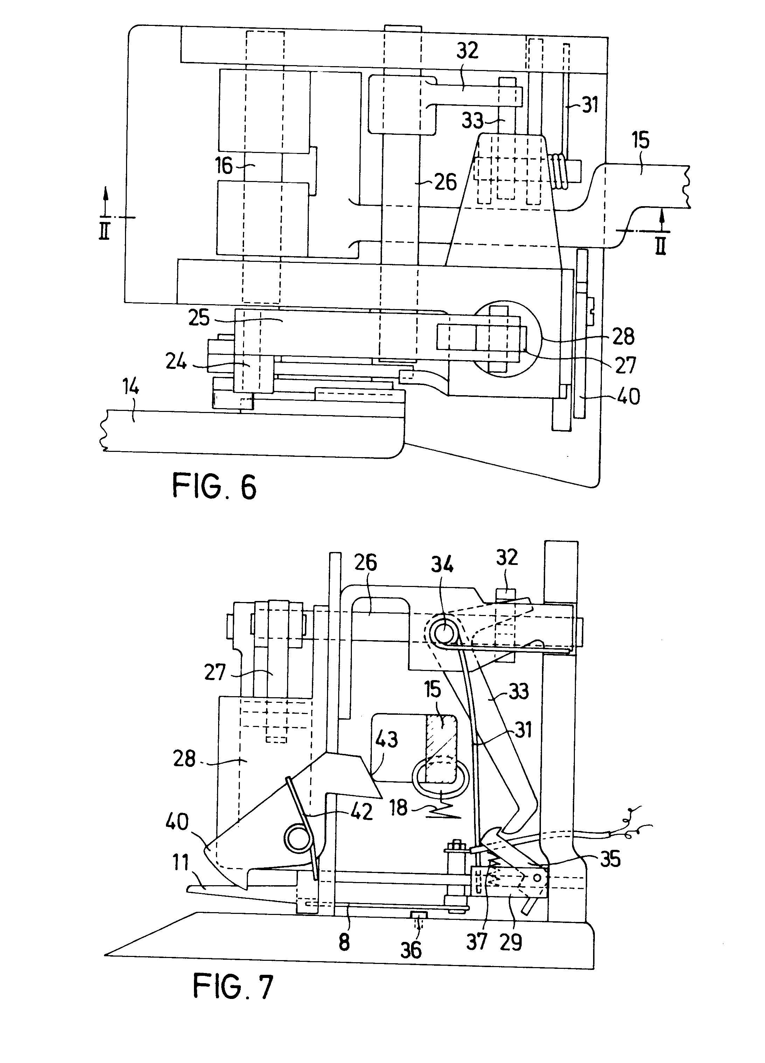

Das erfindungsgemäße Handschweißgerät dient zum Festschweißen der einander überlappenden Enden eines thermoplastischen Umschnürungsbandes 1. Der Anfang 2 des Umschnürungsbandes 1 wird zwischen einer Klemmfläche 3 und einem Klemmstück 4 eingeschoben und durch Absenken des Klemmstücks 4 festgeklemmt. Danach wird das Umschnürungsband um ein Packstück gelegt und das Bandende von der Seite zwischen einem Spannbett 6 und einer Spannrolle 7 eingeschoben. Durch Absenken der Spannwalze 7, die mit kleinen Greifzähnen versehen ist, wird das Umschnürungsband 1 gehalten. Das Umschnürungsband kann nun von Hand gespannt werden, weil die Spannwalze 7 über eine Freilaufkupplung mit dem Spannhebel 14 in Verbindung steht. Wird in Figur 1 die Achse 13 mit Hilfe des Betätigungshebels 14 über eine in dieser Drehrichtung sperrende Freilaufkupplung im Gegenuhrzeigersinn gedreht, dann nehmen die in das Umschnürungsband eingreifenden Zähne das Umschnürungsband mit, welches dabei über das Spannbett gleitet. Ist eine gewünschte Bandspannung erreicht, dann wird der Betätigungshebel 14 im Uhrzeigersinn verschwenkt. Eine Schleppkupplung 44, die insbesondere aus Fig. 3 und 5 ersichtlich ist, kommt mit einem Anschlag 45 in Anlage an einen Kurbelarm 23, der über eine Koppel 24, einen Kipphebel 25 und eine Schwinge 27 mit dem Preßstempel 9 und der Schneideinrichtung 11,12 gekuppelt ist. Der Kurbelarm 23 ist ferner über die Kipphebelwelle 26, einem aus Fig. 2 ersichtlichen Gabelarm 23 und einem insbesondere aus Fig. 7 ersichtlichen zweiarmigen Hebel 33, der um die Achse 34 schwenkbar ist, mit einem Schlitten 29 gekuppelt, der das verschiebbare Heizelement 8 trägt.

Wird der Betätigungshebel 14 im Uhrzeigersinn weiterverschwenkt, dann wird das plattenförmige Heizelement 8 zwischen die zu verschweißenden Bandenden geschoben und das Heizelement wird von einer Rückstellfeder 31 wieder zurückbewegt, unmittelbar bevor der Preßstempel 9 die zu verschweißenden Bandenden gegeneinanderpreßt. Eine Kante 12 des Preßstempels 9 ist als bewegliche Schneidkante ausgebildet, die mit der feststehenden Schneide 11 zusammenarbeitet.

Damit das Umschnürungsband nicht seitlich aus dem Handschweißgerät herausrutschen kann, ist eine verschwenkbare Führungswange 19 vorgesehen sowie eine Führungsklinke 40, die geöffnet werden kann, wenn der Lüfterhebel 15 hochgehoben wird.

Wie insbesondere Fig. 2 zeigt, ist der Lüfterhebel 15 um die Achse 16 schwenkbar. Am Lüfterhebel 15 ist die Drehachse 13 der Spannwalze 7 angeordnet. Wie die Fig. 1 und 4 zeigen, ist um die Drehachse 13 schwenkbar auch die Führungswange 19 angeordnet, die von einer Rückstellfeder 22 in Schließstellung bewegt wird. Wird - wie Fig. 1 zeigt - der Lüfterhebel 15 gegen die Wirkung der Feder 18 angehoben, dann stößt die Nase 20 der Führungswange 19 gegen einen festen Anschlag 21, so daß die Führungswange 19 in die in Fig. 1 dargestellte Öffnungsstellung geschwenkt wird. Wird dagegen - wie Fig. 4 zeigt - der Lüfterhebel 15 abgesenkt, dann zieht die Rückstellfeder 22 die Führungswange 19 in Schließstellung.

Wie Fig. 7 zeigt, ist die Führungsklinke 40 um die Achse 41 schwenkbar gelagert und wird von der Rückstellfeder 42 in Öffnungsstellung gedrückt. Wird der Lüfterhebel 15 angehoben, dann schwenkt die Feder 42 die Führungsklinke 40 im Uhrzeigersinn, so daß der seitliche Bandeinlaß offen ist. Bei abgesenktem Lüfterhebel 15 drückt eine Kante dieses Hebels auf die schräge Steuerfläche 43 so, daß die Führungsklinke in Schließstellung gelangt.

Wie Fig. 7 zeigt, ist der zweiarmige Hebel 33 über eine Steuerklinke 35 mit dem Schlitten 29 gekuppelt. Die Klinke 35 steht unter der Wirkung einer Feder 37. Wird der Schlitten 29 von dem zweiarmigen Hebel 33 nach links bewegt, dann stößt ein vorspringendes Teil der Steuerklinke gegen einen einstellbaren Anschlag 36, so daß die Klinke nach unten schwenkt und der Schlitten 29 zusammen mit dem Heizelement 8 von der Rückstellfeder 31 schlagartig nach rechts bewegt wird.

Durch Zurückschwenken des Betätigungshebels in Spannrichtung wird der zweiarmige Hebel 33 wieder in seine Ausgangslage gebracht, wobei er über die Klinke 35 hinwegrutscht und die unter der Wirkung der Feder 37 stehende Klinke in Raststellung gelangt.

Beim Hochschwenken des Lüfterhebels 15 um die Achse 16 wird zunächst die Spannwalze 7 aus dem Spannbett 6 um etwa 3 mm herausgehoben. Dabei wird die seitliche Führungswange 19 und die Führungsklinke 40 so weit verschwenkt, daß der seitliche Einlaß für das Band 1 offen ist. Durch weiteres Anheben des Lüfterhebels 15 drückt der Winkelhebel 17 gegen die vorgespannte Blattfeder 5 des Klemmstücks 4, so daß sich das Klemmstück 4 von der Klemmfläche 3 abhebt. In diesem Zustand kann der Bandanfang 2 zwischen Klemmfläche 3 und Klemmstück 4 eingeschoben werden. Durch Nachlassen des Lüfterhebels 15 wird der Bandanfang 2 festgeklemmt. Das Bandende kann dann zwischen dem Spannbett 6 und der Spannwalze 7 eingelegt werden. Durch völliges Loslassen des Lüfterhebels 15, der von einer Rückstellfeder 18 nach unten gezogen wird, wird das Bandende zwischen Spannbett 6 und Spannwalze 7 eingeklemmt. Das Umschnürungsband 1 kann nun schnell von Hand gespannt werden. Mit Hilfe des Betätigungshebels 4, der über einen Freilauf 47 mit der Spannwalze 7 gekuppelt ist, erhält das thermoplastische Band 1 seine endgültige Spannung.

Wird der Betätigungshebel 15 nach rechts geschwenkt, so kommt er zunächst an einen Druckpunkt, der im wesentlichen von der starken Rückstellfeder 31 verursacht wird. Durch weiteres Herunterdrücken des Betätigungshebels 14 wird über den Anschlag 45, dem Kurbelarm 23 und der Koppel 24 ein Kipphebel 25 verschwenkt. Der Kipphebel 25 drückt über eine Schwinge 27 den Preßstempel 9 und die bewegliche Schneidkante 12 nach unten. Gleichzeitig dreht die Kipphebelwelle 26 einen Gabelarm 32 gegen den kurzen Arm des zweiarmigen Hebels 33, der um eine rechtwinklig zur Kipphebelwelle 26 verlaufenden Achse 34 schwenkbar ist. Der lange Arm des zweiarmigen Hebels 33 schiebt das Heizelement 8 zwischen die zu verbindenden Bandenden unterhalb der Preßplatte 10.

Bevor die Preßplatte 10 die Bandenden zusammenpreßt,
rutscht der längere Arm des zweiarmigen Hebels 33 über
die Klinke 35, so daß das Heizelement 8 von der stark
gespannten Feder 31 zurückgeschoben wird.

Damit der lange Arm des zweiarmigen Hebels 33 wieder
hinter die Steuerklinke 35 des Schlittens 29 greift, muß
der Betätigungshebel 14 ganz in Spannrichtung verschwenkt
werden, bis der Anschlag gegen den Kurbelarm 23 stößt und
durch Verschwenken des Kurbelarmes 23 im Gegenuhrzeigersinn alle Teile 24 bis 33 sowie der Preßstempel 9 in ihre
Ausgangsstellung gebracht werden.

P a t e n t a n s p r ü c h e

1. Handschweißgerät für thermoplastische Umschnürungsbänder mit einer Klemmvorrichtung zum Festhalten des Bandanfangs, einer sich aus einem feststehenden Spannbett und einer drehbaren und vom Spannbett abhebbaren Spannwalze zusammensetzenden Spannvorrichtung, einem plattenförmigen zwischen die überlappenden Bandenden zeitweilig einschiebbaren Heizelement, einem Preßstempel zum Andrücken der erhitzten Bandenden und mit einer Schneidvorrichtung zum Abschneiden eines Umschnürungsbandes von einer Vorratsrolle, wobei zur Betätigung der Klemmvorrichtung, der Spannvorrichtung, der Schneidvorrichtung, des Preßstempels und des Heizelements Handhebel vorgesehen sind,
dadurch gekennzeichnet,
daß zum Öffnen der Klemmvorrichtung (3,4) und zum Öffnen der Spannvorrichtung (6,7) ein gegen die Wirkung mindestens einer Feder (5,18) verschwenkbarer Lüftungshebel (15) vorgesehen ist und
daß ein über eine Freilaufkupplung (47) mit der Spannwalze (7) kuppelbarer Betätigungshebel (14) über eine Schleppkupplung (44,45,46) mit dem Heizelement (8), der Schneidvorrichtung (11,12) und dem Preßstempel (9) kuppelbar ist, wobei das Abschneiden und Zusammenschweißen der überlappenden Enden durch Bewegen des Betätigungshebels (14) in Freilaufrichtung erfolgt.

2. Handschweißgerät nach Anspruch 1, dadurch gekennzeichnet, daß die Klemmvorrichtung sich zusammensetzt aus einer feststehenden Klemmfläche (3) und einem durch die Wirkung einer vorgespannten Feder (5) gegen die Klemmfläche (3) drückenden Klemmstück (4).

3. Handschweißgerät nach Anspruch 2, dadurch gekennzeichnet, daß die Feder (5) eine Blattfeder ist.

4. Handschweißgerät nach Anspruch 2 oder 3, dadurch gekennzeichnet, daß das Klemmstück (4) aus Kunststoff hergestellt ist.

5. Handschweißgerät nach einem der Ansprüche 1 bis 4, dadurch gekennzeichnet, daß die obere Seite des Klemmstücks das Spannbett (6) für die Spannvorrichtung bildet.

6. Handschweißgerät nach Anspruch 5, dadurch gekennzeichnet, daß das Spannbett (6) gewölbt und dem Durchmesser der Spannwalze angepaßt ist.

7. Handschweißgerät nach einem der Ansprüche 1 bis 6, dadurch gekennzeichnet, daß die Schneidvorrichtung (11,12) und der Preßstempel (10) mit einem Kurbelarm (23 ) und das an einem geführten Schlitten befestigte plattenförmige Heizelement über eine auslösbare Klinke mit dem Kurbelarm (23) gekuppelt ist und der Kurbelarm (23) über eine mehr als 20° freilaufende Schleppkupplung (44) mit dem Betätigungshebel (14) kuppelbar ist.

8. Handschweißgerät nach einem der Ansprüche 1 bis 7, dadurch gekennzeichnet, daß der Kurbelarm (23) sowie der Betätigungshebel (14) um die Drehachse der Spannwalze (7) schwenkbar sind.

9. Handschweißgerät nach einem der Ansprüche 1 bis 8, dadurch gekennzeichnet, daß um die Drehachse (13) der Spannwalze (7) eine Führungswange (19) schwenkbar gelagert ist, die von einer Rückstellfeder (22) in

0006191

Schließstellung gehalten ist und durch Anheben des Lüfterhebels (15) und der Drehachse (13) mittels einer Steuernase (20) und einem feststehenden Anschlag (21) in Öffnungsstellung schwenkbar ist.

10. Handschweißgerät nach einem der Ansprüche 1 bis 9, dadurch gekennzeichnet, daß in Nähe der Schneidvorrichtung (11,12) eine Führungsklinke (40) angeordnet ist, die durch Anheben des Lüfterhebels (15) in Öffnungsstellung schwenkbar ist.

0006191

FIG. 1

0006191

FIG. 2

FIG. 3

0006191

FIG. 4

FIG. 5

FIG. 6

FIG. 7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>NL - A - 77 12668</u> (FROMM) <br> * Seite 5, Zeilen 4-33; Figur 1 * <br> & DE - A - 2 701 126 <br><br> -- | 1,2,5-7 |
| | <u>GB - A - 1 143 442</u> (MASAHO TAKAMI) <br> * Seite 2, Zeile 94 - Seite 3, Zeile 40; Figuren 1-4 * <br><br> -- | 1,5,7,10 |
| | <u>DE - A - 2 102 344</u> (CYKLOP) <br> * Seite 10, Zeile 9 - Seite 13, Zeile 8; Figur 1 * <br><br> -- | 1,5-7 |
| | <u>FR - A - 2 193 693</u> (FMC) <br> * Seite 5, Zeile 12 - Seite 7, Zeile 20; Seite 8, Zeile 23 - Seite 9, Zeile 18; Figuren 1,9 * <br><br> ---- | 1,5-7 |

KLASSIFIKATION DER ANMELDUNG (Int.Cl.²)

B 65 B 13/32

RECHERCHIERTE SACHGEBIETE (Int. Cl.²)

B 65 B

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17-09-1979 | JAGUSIAK |

EPA form 1503.1   06.78